# EUROPÄISCHE PATENTANMELDUNG

(11) **EP 3 246 188 A1**
(43) Veröffentlichungstag der Anmeldung: **22.11.2017**
(21) Anmeldenummer: 17170155.0
(22) Anmeldetag: 09.05.2017
(51) Int. Cl.: B60K 6/40, B60K 6/48, B60K 1/02, B60W 30/184, B60K 17/28, B60K 6/52, B60K 17/34

(54) **NUTZFAHRZEUG MIT EINEM PARALLEL-HYBRID-ANTRIEBSSTRANG**

(30) Priorität: 19.05.2016 DE 102016006206
(71) Anmelder: MAN Truck & Bus AG, 80995 München (DE)
(72) Erfinder: MÜLLER, Anton, 82327 Tutzing (DE); MAYER, Florian, 83064 Raubling (DE); FISSMANN, Tobias, 80939 München (DE); WÖRMANN, Peter, 85391 Allershausen (DE)
(74) Vertreter: v. Bezold & Partner Patentanwälte - PartG mbB

(57) **Zusammenfassung**

Die Erfindung betrifft ein Nutzfahrzeug, insbesondere einen Lastkraftwagen, umfassend einen Leiterrahmen, mit zwei Längsträgern, die durch Querträger miteinander verbunden sind. Das Nutzfahrzeug umfasst ferner einen Parallel-Hybrid-Antriebsstrang, aufweisend eine Brennkraftmaschine, die über ein Hauptgetriebe antriebsmäßig mit einer Achse verbindbar ist, ein Anpassgetriebe und mindestens eine am Anpassgetriebe angeordnete generatorisch und motorisch betreibbare elektrische Maschine, die über ein Anpassgetriebe antriebsmäßig mit der Achse verbindbar ist. Das Hauptgetriebe ist hierbei mit der Achse über zwei hintereinander angeordnete Gelenkwellen verbunden, die über das Anpassgetriebe miteinander gekoppelt sind, wobei das Anpassgetriebe einen Durchtrieb aufweist, der der Übertragung des Antriebsdrehmoments der Brennkraftmaschine von der ersten Gelenkwelle auf die zweite Gelenkwelle dient. Das Anpassgetriebe ist am Leiterrahmen befestigt.

## Beschreibung

Die Erfindung betrifft ein Nutzfahrzeug, insbesondere einen Lastkraftwagen, mit einem Parallel-Hybrid-Antriebsstrang.

Im Stand der Technik sind Nutzfahrzeuge bekannt, die ausschließlich verbrennungsmotorisch angetrieben werden. Ferner sind Hybrid-Nutzfahrzeuge bekannt, die nicht nur verbrennungsmotorisch, sondern auch elektromotorisch angetrieben werden. Die Integration eines Elektroantriebs in ein zudem verbrennungsmotorisch angetriebenes Nutzfahrzeug ist mitunter deshalb aufwändig und kostspielig, weil zur Integration des Elektroantriebs üblicherweise von Standardbauteilen abgewichen werden muss und somit neue, spezielle Konfigurationen erforderlich werden. Aus dem Stand der Technik sind beispielsweise Nutzfahrzeuge mit einem Parallel-Hybrid-Antriebsstrang bekannt, bei denen die elektrische Maschine kinematisch zwischen dem Verbrennungsmotor und dem Schaltgetriebe des Verbrennungsmotors angeordnet ist, so dass ein Kraftfluss sowohl des Verbrennungsmotors als auch der elektrischen Maschine über das Schaltgetriebe auf eine angetriebene Achse ermöglicht wird. Nachteilig an diesen bekannten Ansätzen sind einerseits die hierfür erforderlichen aufwändigen Schnittstellen der E-Maschine zum Antriebsstrang und andererseits, dass die E-Maschine und ein ihr zugeordneter Wechselrichter den mechanischen Belastungen und der entstehenden Wärme der Motor-Getriebe-Kombination ausgesetzt ist.

Es ist somit eine Aufgabe der Erfindung, ein Nutzfahrzeug mit einem verbessertes Parallel-Hybrid-Antriebsstrang bereitzustellen, mit dem Nachteile herkömmlicher Ansätze vermieden werden können. Die Aufgabe der Erfindung ist es insbesondere, einen Ansatz zur Hybridisierung eines Nutzfahrzeugs bereitzustellen, mit dem herkömmliche rein verbrennungsmotorische Nutzfahrzeuge leicht als Hybridfahrzeuge nachgerüstet werden können oder mit dem sich hybridisierte Fahrzeuge bei Bedarf leicht rückrüsten lassen. Es ist eine weitere Aufgabe der Erfindung, ein Nutzfahrzeug mit einem Parallel-Hybrid-Antriebsstrang bereit zu stellen, bei dem eine elektrische Maschine und vorzugsweise auch ein Wechselrichter möglichst gut vor mechanischen Belastungen einer Achse und/oder einer Motor-Getriebe-Kombination und vor der thermischen Wärmeabstrahlung des Verbrennungsmotors geschützt sind.

Diese Aufgaben werden durch ein Nutzfahrzeug mit den Merkmalen des unabhängigen Anspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Erfindungsgemäß wird ein Nutzfahrzeug bereitgestellt, das insbesondere ein Lastkraftwagen (LKW) sein kann. Das Nutzfahrzeug umfasst in an sich bekannter Weise einen Leiterrahmen als Fahrgestell, aufweisend zwei Längsträger, die durch Querträger miteinander verbunden sind. Das Nutzfahrzeug umfasst ferner einen Parallel-Hybrid-Antriebsstrang. Bei einem Parallel-Hybrid-Antriebsstrang können die elektrische Maschine und die Brennkraftmaschine zugleich auf den Antriebsstrang wirken, was die Kräfte oder Drehmomente der einzelnen Antriebe addiert.

Der Parallel-Hybrid-Antriebsstrang umfasst eine Brennkraftmaschine, die über ein Schaltgetriebe antriebsmäßig mit einer Achse (Antriebsachse) verbindbar ist. Das Schaltgetriebe wird nachfolgend auch als "Hauptgetriebe" bezeichnet zur besseren Unterscheidbarkeit von einem nachfolgend noch zu beschreibenden Anpassgetriebe des Parallel-Hybrid-Antriebsstrangs. Die Brennkraftmaschine ist vorzugsweise als Dieselmotor ausgeführt.

Gemäß allgemeinen Gesichtspunkten der Erfindung umfasst der Parallel-Hybrid-Antriebsstrang ferner ein Getriebe, nachfolgend als Anpassgetriebe bezeichnet, und mindestens eine am Anpassgetriebe angeordnete generatorisch und motorisch betreibbare elektrische Maschine, die über das Anpassgetriebe antriebsmäßig mit der Achse verbindbar ist. Ferner ist das Anpassgetriebe am Leiterrahmen befestigt.

Das Hauptgetriebe ist mit der angetriebenen Achse über zwei hintereinander angeordnete Gelenkwellen verbunden, die über das Anpassgetriebe miteinander gekoppelt sind. Zur Koppelung der beiden Gelenkwellen weist das Anpassgetriebe einen Durchtrieb, z. B. in Form einer Welle, auf, der der Übertragung des Antriebsdrehmoments der Brennkraftmaschine von der ersten Gelenkwelle auf die zweite Gelenkwelle dient. Die Gelenkwellen können beispielsweise als Kardanwellen ausgeführt sein. Die Achse kann insbesondere eine Hinterachse des Nutzfahrzeugs sein, beispielsweise eine Hinterachse, deren Achsdifferential antriebsmäßig mit einer der Gelenkwellen verbunden ist.

Die Erfindung betrifft somit die allgemeine technische Lehre, die elektrische Maschine des Parallel-Hybrid-Antriebsstrangs nicht zwischen Verbrennungsmotor und Schaltgetriebe des Verbrennungsmotors, sondern kinematisch hinter dem Schaltgetriebe des Verbrennungsmotors anzuordnen und ferner ein Anpassgetriebe vorzusehen, das eine Dreifachfunktion ausbildet: Das Anpassgetriebe ist ausgeführt, einen Kraftfluss von dem Elektromotor über das Anpassgetriebe zu der Antriebsachse und in umgekehrter Richtung, z. B. bei einem Rekuperationsbetrieb, zu ermöglichen. Das Anpassgetriebe ist ferner ausgeführt, mittels eines Durchtriebs eine Durchleitung eines am Schaltgetriebe ausgangsseitig von dem Verbrennungsmotor erzeugten Kraftflusses zur Antriebsachse zu ermöglichen. Schließlich dient das Anpassgetriebe zur Befestigung der elektrischen Maschine am Leiterrahmen.

Die kinematische Integration der elektrischen Maschine nach anstatt vor dem Schaltgetriebe des Verbrennungsmotors bietet den besonderen Vorzug, dass dadurch eine vereinfachte Hybridisierung eines herkömmlichen Antriebsstrangs realisiert werden kann. So kann beispielsweise ein herkömmlicher rein verbrennungsmotorisch betriebener Antriebsstrang dadurch "hybridisiert" werden, dass eine elektrische Maschine mit Anpassgetriebe bereitgestellt wird und dass eine herkömmliche Gelenkwelle durch zwei hintereinander angeordnete Gelenkwellen, die über einen Durchtrieb des Anpassgetriebes miteinander gekoppelt sind, ersetzt wird. Das Anpassgetriebe kann dabei als im Vergleich zum Schaltgetriebe kostengünstige Komponente ausgeführt sein, z. B. ohne Gangstufen oder lediglich mit zwei Gangstufen. Ein weiterer Vorzug ist, dass die elektrische Maschine weniger stark den mechanischen Belastungen und der entstehenden Wärme der Motor-Getriebe-Kombination ausgesetzt ist.

Zur Realisierung des vorgeschlagenen Parallel-Hybrid-Antriebsstrangs ist es ausgehend von einem herkömmlichen rein verbrennungsmotorisch betriebenen Antriebsstrangs lediglich erforderlich, eine bestehende Gelenkwelle, die das Schaltgetriebe ausgangsseitig mit der angetriebenen Achse verbindet, durch zwei hintereinander angeordnete Gelenkwellen zu ersetzen, die über einen Durchtrieb gekoppelt sind. Entsprechend ermöglich der erfindungsgemäße Parallel-Hybrid-Antriebsstrang ferner ein leichtes Rückrüsten auf einen herkömmlichen Verbrennungsantrieb, da hierbei die Anordnung aus den beiden Gelenkwellen, dem Anpassgetriebe und mindestens einer elektrischen Maschine lediglich wieder durch eine an sich bekannte herkömmliche Gelenkwelle, die das Schaltgetriebe mit der angetriebenen Achse verbindet, ersetzt werden muss.

Ein weiterer Vorzug der Erfindung liegt darin, dass durch die Anordnung der elektrischen Maschine an Anpassgetriebe und die Befestigung des Anpassgetriebes am Leiterrahmen ferner eine Entkopplung der elektrischen Maschine von den mechanischen Belastungen der Achse und der Motor-Getriebe-Kombinationen sowie von der thermischen Belastung der Brennkraftmaschine erreicht wird.

Diese Anordnung der elektrischen Maschine kinematisch hinter dem Schaltgetriebe ist im Rahmen der Erfindung möglich, da vorzugsweise eine relativ starke elektrische Maschine eingesetzt wird, wie er beispielsweise von rein elektrisch angetriebenen Sportwagen, Super-Sportwagen und Oberklassen-PKW bekannt ist. So kann die elektrische Maschine beispielsweise eine Dauerleistung von mindestens 100 kW, 120 kW, 150 kW oder sogar mindestens 200 kW aufweisen. Die Spitzenleistung der elektrischen Maschine beträgt dagegen vorzugsweise mindestens 250 kW, 300 kW oder sogar 320 kW. Weiterhin ist zu erwähnen, dass die elektrische Maschine vorzugsweise eine Nenndrehzahl von mindestens 5.000 min⁻¹, 7.500 min⁻¹, 10.000 min⁻¹, 12.500 min⁻¹ oder sogar mindestens 15.000 min⁻¹ aufweist.

Weiterhin ist zu erwähnen, dass die elektrische Maschine vorzugsweise mit einer Spannungsklasse, insbesondere einer Zwischenkreisspannungsklasse, von 800 V betrieben wird. Ebenfalls möglich, aber weniger bevorzugt wäre eine Spannungsklasse von 400V. So weisen Bordnetze oftmals eine Zwischenkreisspannungsklasse von 800 V oder 400 V auf, die zum Antrieb der elektrischen Maschine verwendet werden kann. Hierbei ist jedoch zu bemerken, dass der Schutz dieser Erfindungsvariante nicht beschränkt ist auf diese genannten Spannungsklassen.

Das Anpassgetriebe dient zur Anpassung der hohen Drehzahl der elektrischen Maschine an die im Vergleich kleinere Drehzahl der Antriebsachse. Das Anpassgetriebe ist somit vorzugsweise ein Untersetzungsgetriebe zur Untersetzung der Drehzahl der mindestens einen elektrischen Maschine. Das Anpassgetriebe kann hierbei so ausgeführt sein, dass es eine feste, eine variable oder mehrere feste Übersetzungen bereitstellt. Eine besonders bevorzugte Ausführungsform sieht hierbei vor, dass das Anpassgetriebe ein Stirnradgetriebe ist. Ferner besteht die Möglichkeit, dass das Anpassgetriebe ein Planetengetriebe, ein Umschlingungsgetriebe oder eine Kombination der vorgenannten Getriebetypen ist.

Gemäß einer besonders bevorzugten Ausführungsform ist das Anpassgetriebe an einem Querträger des Leiterrahmens befestigt. Dies ist aus Bauraum-technischer Sicht vorteilhaft, da in der Regel das verfügbare Raumangebot an den Längsträgern im Vergleich sehr knapp ist und in der Regel wenig freie verfügbare Anschraubpunkte zu Anbringung zusätzlicher Bauteile (hier Anpassgetriebe und elektrische Maschine) vorhanden sind.

Der Querträger kann hierbei ein an sich bekannter und herkömmlich ausgeführter Querträger eines Leiterrahmens sein.

Alternativ kann das Getriebe selbst auch einen derartigen Querträger bilden, beispielsweise indem das Getriebegehäuse selbst als Querträger dient oder indem an dem Getriebegehäuse ein Querträgerelement befestigt oder integriert ist. Auf diese Weise kann das Getriebe selbst eine Querversteifungsfunktion ausbilden.

Die mindestens eine elektrische Maschine ist am Getriebe angeordnet und befestigt und kann über das Getriebe am Leiterrahmen befestigt sein. Ferner kann die elektrische Maschine auch selbst einen Befestigungspunkt oder Auflagepunkt am Leiterrahmen aufweisen, wodurch eine zusätzliche Lagerstabilität erreicht werden kann.

Gemäß einer weiteren bevorzugten Ausführungsform kann das Anpassgetriebe am Leiterrahmen gedämpft gelagert sein. Hierdurch kann das Anpassgetriebe und eine daran angebundene elektrische Maschine vor mechanischen Belastungen im Fahrbetrieb besser geschützt werden. Eine gedämpfte Lagerung kann beispielsweise durch das Vorsehen von Gummielementen an den Lagerstellen des Getriebes realisiert werden.

Vorstehend wurde bereits erwähnt, dass die Anordnung der elektrischen Maschine hinter dem Schaltgetriebe der Brennkraftmaschine ferner den Vorzug bietet, dass die elektrische Maschine einer wesentlich geringeren Wärmestrahlung ausgesetzt ist, als wenn sie direkt zwischen Verbrennungsmotor und Hauptgetriebe angeordnet wäre. Somit ist es nicht mehr erforderlich, einen Wechselrichter (Inverter), über den die elektrische Maschine mit einem Energiespeicher in Verbindung steht, räumlich getrennt von der elektrischen Maschine anzuordnen, um diesen vor dieser Wärmestrahlung zu schützen. Vielmehr sieht eine vorteilhafte Ausführungsvariante der Erfindung vor, dass ein Wechselrichter (Inverter), über den die elektrische Maschinen mit einem Energiespeicher in Verbindung steht, an der elektrischen Maschine angeordnet ist und/oder mit der elektrischen Maschine eine bauliche Einheit bildet. Dadurch können Montageaufwände reduziert und Bauraum eingespart werden. Ein weiterer Vorzug ist, dass die Anordnung des Wechselrichters nach der elektrischen Maschine dazu führt, dass der Wechselrichter ebenso wie die elektrische Maschine weniger stark den mechanischen Belastungen und der entstehenden Wärme der Motor-Getriebe-Kombination ausgesetzt ist.

Vorstehend wurde bereits erwähnt, dass mindestens eine elektrische Maschine am Anpassgetriebe angeordnet sein kann. Vorzugsweise weist das Anpassgetriebe zwei Getriebeschnittstellen auf, so dass wahlweise eine oder zwei elektrische Maschinen über das Anpassgetriebe antriebsmäßig mit der Achse verbindbar sind. Bei einer vorteilhaften Variante dieser Ausgestaltungsform ist eine Getriebeübersetzung des Anpassgetriebes für die beiden Getriebeschnittstellen unterschiedlich. So kann, falls zwei elektrische Maschinen an dem Anpassgetriebe angeschlossen sind, wahlweise diejenige der beiden elektrischen Maschinen zur Antriebsunterstützung und/oder Rekuperation verwendet werden, deren zugeordnete Übersetzung zweckmäßig am besten zur jeweiligen Betriebssituation passt.

Eine weitere Möglichkeit der erfindungsgemäßen Realisierung sieht vor, dass das Anpassgetriebe neben den Wellenflanschen zur Anbindung der beiden Gelenkwellen mindestens einen weiteren Wellenflansch zum Antrieb einer Vorderachse des Nutzfahrzeugs oder zum Antrieb eines Nebenaggregats aufweist. Hierbei kann eine Vorderachse und/oder ein Nebenaggregat des Nutzfahrzeugs in Antriebsverbindung mit dem Anpassgetriebe stehen. Auf diese Weise kann die Antriebsleistung des hybridisierten Antriebsstrangs nicht nur zum Antrieb einer Achse, sondern auch zum Antrieb einer weiteren Achse oder eines Nebenaggregats genutzt werden.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Draufsicht auf einen Parallel-Hybrid-Antriebsstrang gemäß einer ersten Ausführungsform der Erfindung;
- Figur 2A bis 2C: verschiedene Ausführungsvarianten zur Befestigung des Anpassgetriebes am Leiterrahmen; und
- Figur 3: eine schematische Draufsicht auf einen aus dem Stand der Technik bekannten rein verbrennungsmotorisch angetriebenen Antriebsstrang.

Gleiche oder funktional äquivalente Elemente sind in allen Figuren mit denselben Bezugszeichen gezeichnet und zum Teil nicht gesondert beschrieben.

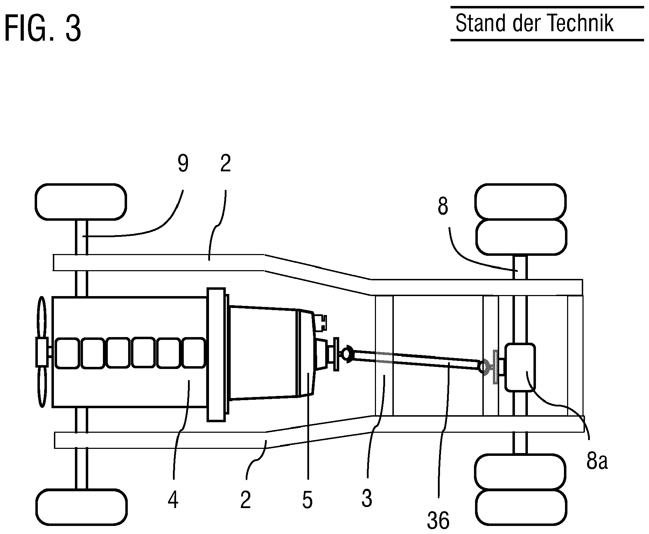

In Figur 3 ist zunächst eine stark schematisierte Draufsicht eines aus dem Stand der Technik bekannten herkömmlichen rein verbrennungsmotorischen Antriebsstrangs eines Nutzfahrzeugs sowie ein Leiterrahmen des Nutzfahrzeugs gezeigt. Der Leiterrahmen besteht in an sich bekannter Weise aus zwei Längsträgern 2, die durch mehrere Querträger 3 miteinander verbunden sind. Der konventionelle Antriebsstrang umfasst eine Dieselbrennkraftmaschine 4, die antriebsmäßig mit einem Mehrgang-Schaltgetriebe 5 in Verbindung steht. Eine Ausgangsseite des Schaltgetriebes 5 ist über eine Kardanwelle 36 antriebsmäßig mit einem Achsdifferential 8a einer angetriebenen Hinterachse 8 des Nutzfahrzeugs in Verbindung.

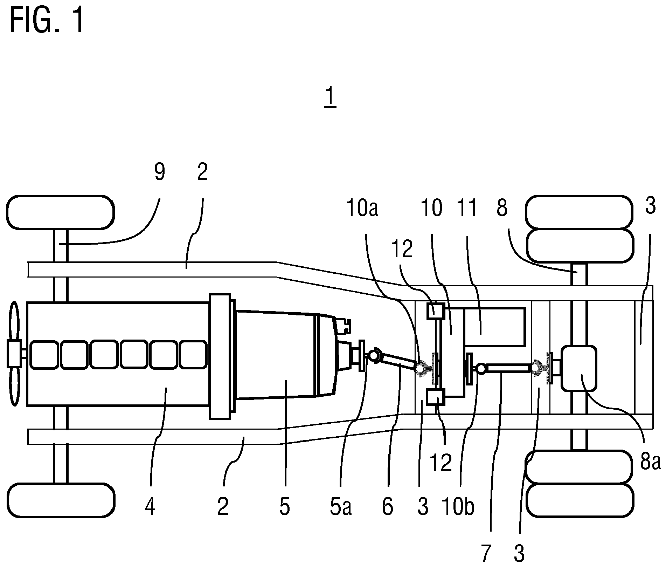

Figur 1 zeigt dagegen einen Lastkraftwagen 1 mit einem Parallel-Hybrid-Antriebsstrang. Zur besseren Verdeutlichung der Erfindung zeigt Figur 1 nur einen Leiterrahmen und einen Parallel-Hybrid-Antriebsstrang des Nutzfahrzeugs in einer stark schematisierten Darstellung.

Der Leiterrahmen des Lastkraftwagens 1 umfasst wiederum in an sich bekannter Weise zwei Längsträger 2, die durch Querträger 3 miteinander verbunden sind. Der Antriebsstrang umfasst eine Dieselbrennkraftmaschine 4, die in herkömmlicher Weise ausgeführt sein kann und die im Bereich der Vorderachse 9 zwischen den beiden Längsträgern 2 angeordnet ist. Die Dieselbrennkraftmaschine 4 ist antriebsmäßig mit einem Schaltgetriebe (Hauptgetriebe) 5 verbunden, das die Motordrehzahl auf die Antriebsdrehzahl übersetzt. Der Antriebsstrang umfasst ferner ein Anpassgetriebe 10 in Form eines Stirnradgetriebes, an dem in Figur 1 eine elektrische Maschine 11 angeordnet ist. Das Anpassgetriebe 10 und die elektrische Maschine 11 sind im Bereich zwischen den beiden Längsträgern 2 angeordnet. Die elektrische Maschine 11 ist über das Anpassgetriebe 10 antriebsmäßig sowohl mit der Hinterachse 8 als auch mit der Brennkraftmaschiene-Getriebe-Kombination 4, 5 verbindbar.

Das Anpassgetriebe 6 ist ein Untersetzungsgetriebe zur Untersetzung der Drehzahl einer am Getriebe angeordneten elektrischen Maschine. Das Anpassgetriebe 10 kann aber auch zwei Getriebeschnittstellen aufweisen, so dass neben der in Figur 1 gezeigten elektrischen Maschine 11 noch eine weitere elektrische Maschine am Anpassgetriebe 10 anschließbar ist, z. B. falls höhere Leistungsanforderungen an den elektrischen Antrieb gestellt werden.

Das Schaltgetriebe (Hauptgetriebe) 5 der Dieselbrennkraftmaschine 4 ist mit der hinteren angetriebenen Achse über zwei hintereinander angeordnete Gelenkwellen 6, 7 verbunden, die über das Anpassgetriebe 10 miteinander gekoppelt sind. Hierzu weist das Anpassgetriebe 10 einen Durchtrieb auf, der der Übertragung des Antriebsdrehmoments der Brennkraftmaschine ohne Drehzahländerung von der ersten Gelenkwelle 6 auf die zweite Gelenkwelle 7 dient. Die zwischen Schaltgetriebe und Anpassgetriebe angeordnete erste Gelenkwelle 6 ist somit an ihrer schaltgetriebeseitigen Stirnseite mit einem am Ausgang des Schaltgetriebes 5 angeordneten Gelenkwellenflansch 5a verbunden. An ihrer anpassgetriebeseitigen Stirnseite ist die erste Gelenkwelle 6 mit einem Gelenkwellenflansch 10a verbunden, der am Anpassgetriebe 10 am Durchtrieb angeordnet ist. Die zwischen Anpassgetriebe 10 und Hinterachse 8 angeordnete zweite Gelenkwelle 7 ist entsprechend an einer Stirnseite über einen Gelenkwellenflansch 10b mit dem Anpassgetriebe 10 und an der anderen Stirnseite über einen Gelenkwellenflansch mit einem Achsdifferential 8a der hinteren Achse 8 verbunden. Der Durchtrieb des Anpassgetriebes 10 ist als Welle ausgeführt, die die beiden Gelenkwellenflansche 10a, 10b miteinander verbindet und in die ein Zahnrad des Anpassgetriebes eingreift, über das die elektrischen Maschine 11 antriebsmäßig mit dem Durchtrieb verbunden ist.

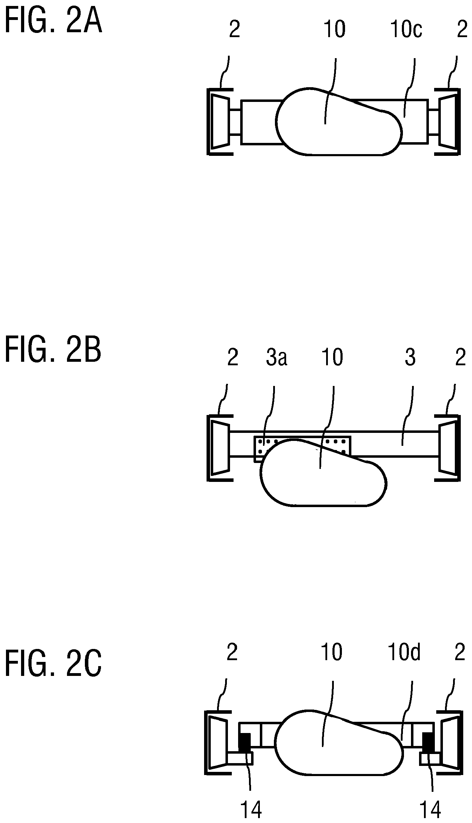

Das sich zwischen der Vorderachse 9 und der Hinterachse 8 des Nutzfahrzeugs befindliche Anpassgetriebe 10 ist über Befestigungselemente 12, z. B. eine Verschraubung, direkt an einem Querträger 3 des Leiterrahmens befestigt, was in den Figuren 2A bis 2C noch detaillierter erläutert wird.

Wie der Vergleich der Figuren 1 und 3 zeigt, ermöglicht der in Figur 1 gezeigte Parallel-Hybrid-Antriebsstrang eine einfache Hybridisierung eines konventionellen Antriebsstranges, wie er in Figur 3 gezeigt ist. Im Wesentlichen ist es hierzu erforderlich, eine herkömmliche Gelenkwelle (Kardanwelle 36) durch die in Figur 1 gezeigte Anordnung aus zwei Gelenkwellen 6, 7, dem Anpassgetriebe 10 und der elektrischen Maschine 11 zu ersetzen.

Figur 2A zeigt eine schematische Vorderansicht im Schnitt auf einen Leiterrahmen des Nutzfahrzeugs zur Illustration einer ersten Anbringungsvariante des Anpassgetriebes 10 am Querträger. Mit dem Bezugszeichen 2 sind wiederum die beiden Längsträger des Leiterrahmens bezeichnet. Gemäß der in Figur 2A gezeigten Ausführungsvariante bildet das Getriebe 10 selbst einen Querträger aus, indem am Getriebegehäuse ein Querträgerelement 10c befestigt ist, über das das Getriebe 10 zwischen den beiden Längsträgern 2 befestigt wird. Das Querträgerelement 10c kann somit einen herkömmlichen Querträger ersetzen. Auf diese Weise kann das Getriebe 10 selbst bei entsprechend zweckmäßiger Ausführung des Querträgerelements 10c eine Querversteifungsfunktion ausbilden.

Figur 2B zeigt eine schematische Vorderansicht im Schnitt auf einen Leiterrahmen des Nutzfahrzeugs zur Illustration einer zweiten Anbringungsvariante des Anpassgetriebes 10. Gemäß einer alternativen Ausführungsvariante, die in Figur 2B gezeigt ist, wird das Getriebe 10 direkt an einem herkömmlichen Querträger 3 des Leiterrahmens gezeigt. Der Querträger 3 ist hier stark schematisiert und vereinfacht gezeichnet. Das Anpassgetriebe 10 kann beispielsweise mittels einer Lochplatte 3a direkt am Querträger 3 verschraubt werden.

Figur 2C illustriert eine Ausführungsvariante, in der das Anpassgetriebe 10 am Leiterrahmen, insbesondere an den Längsträgern 2, gedämpft gelagert ist. Hierzu wird das Anpassgetriebe 10 an einem Querträgerelement 10d befestigt, das wiederum über Dämpfungselemente 14, z. B. Gummielemente, an den beiden Längsträgern 2 gelagert ist.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Nutzfahrzeug
- 2: Längsträger der Leiterrahmens
- 3: Querträger des Leiterrahmens
- 3a: Lochplatte
- 4: Brennkraftmaschine
- 5: Schaltgetriebe (Hauptgetriebe)
- 5a: Gelenkwellenflansch
- 6: Erste Gelenkwelle
- 7: Zweite Gelenkwelle
- 8: Hinterachse
- 8a: Achsdifferential
- 9: Vorderachse
- 10: Anpassgetriebe
- 10a: Gelenkwellenflansch
- 10b: Gelenkwellenflansch
- 10c, 10d: Querträgerelement
- 11: Elektrische Maschine
- 12: Befestigungselement
- 14: Dämpfungselement
- 36: Gelenkwelle (Kardanwelle)

## Patentansprüche

1. Nutzfahrzeug (1), insbesondere Lastkraftwagen, umfassend
a) einen Leiterrahmen, aufweisend zwei Längsträger (2), die durch Querträger (3) miteinander verbunden sind,
b) einen Parallel-Hybrid-Antriebsstrang, aufweisend eine Brennkraftmaschine (4), die über ein Hauptgetriebe (5) antriebsmäßig mit einer Achse (8), insbesondere einer Hinterachse, verbindbar ist, ein Anpassgetriebe und mindestens eine am Anpassgetriebe angeordnete generatorisch und motorisch betreibbare elektrische Maschine (11), die über das Anpassgetriebe (10) antriebsmäßig mit der Achse (8) verbindbar ist, wobei
c) das Hauptgetriebe (5) mit der Achse (8) über zwei hintereinander angeordnete Gelenkwellen (6, 7) verbunden ist, die über das Anpassgetriebe (10) miteinander gekoppelt sind, wobei das Anpassgetriebe (10) einen Durchtrieb aufweist, der der Übertragung des Antriebsdrehmoments der Brennkraftmaschine von der ersten Gelenkwelle (6) auf die zweite Gelenkwelle (7) dient, und
d) das Anpassgetriebe (10) am Leiterrahmen (2, 3) befestigt ist.

2. Nutzfahrzeug nach Anspruch 1, **dadurch gekennzeichnet, dass** das Anpassgetriebe (10) an einem Querträger (3) des Leiterrahmens befestigt ist oder einen Querträger (10c; 10d) des Leiterrahmens bildet.

3. Nutzfahrzeug nach Anspruch 1 oder 2, **dadurch gekennzeichnet, dass** das Anpassgetriebe (10) zwischen den zwei Längsträgern (29) angeordnet und
a) an diesen mittelbar über ein Querträgerelement (10c; 10d) oder
b) unmittelbar befestigt ist und vorzugsweise dadurch eine Querversteifungsfunktion ausbildet.

4. Nutzfahrzeug nach einem der vorhergehenden Ansprüche, **dadurch gekennzeichnet, dass** das Anpassgetriebe (10) am Leiterrahmen gedämpft gelagert ist.

5. Nutzfahrzeug nach einem der vorhergehenden Ansprüche, **dadurch gekennzeichnet, dass** ein Wechselrichter, über den die elektrische Maschine (11) mit einem Energiespeicher in Verbindung steht, an der elektrischen Maschine angeordnet ist und/oder mit der elektrischen Maschine eine bauliche Einheit bildet.

6. Nutzfahrzeug nach einem der vorhergehenden Ansprüche, **dadurch gekennzeichnet, dass** das Anpassgetriebe zwei Getriebeschnittstellen aufweist, so dass wahlweise eine oder zwei elektrische Maschinen über das Anpassgetriebe antriebsmäßig mit der Achse verbindbar sind.

7. Nutzfahrzeug nach Anspruch 6, **dadurch gekennzeichnet, dass** eine Getriebeübersetzung des Anpassgetriebes für die beiden Getriebeschnittstellen unterschiedlich ist.

8. Nutzfahrzeug nach einem der vorhergehenden Ansprüche, **dadurch gekennzeichnet,**
a) **dass** das Anpassgetriebe neben den Wellenflanschen (10a, 10b) zur Anbindung der beiden Gelenkwellen (6, 7) mindestens einen weiteren Wellenflansch zum Antrieb einer Vorderachse des Nutzfahrzeuges oder eines Nebenaggregats aufweist; und/oder
b) **dass** eine Vorderachse und/oder ein Nebenaggregat des Nutzfahrzeugs in Antriebsverbindung mit dem Anpassgetriebe stehen.

9. Nutzfahrzeug nach einem der vorhergehenden Ansprüche, **dadurch gekennzeichnet, dass** das Anpassgetriebe
a) ein Stirnradgetriebe, ein Planetengetriebe oder ein Umschlingungsgetriebe ist; und/oder
b) ein Untersetzungsgetriebe zur Untersetzung der Drehzahl der mindestens einen elektrischen Maschine ist und dabei eine feste, eine variable oder mehrere feste Übersetzungen bereitstellt.

10. Nutzfahrzeug nach einem der vorhergehenden Ansprüche, **dadurch gekennzeichnet,**
a) **dass** die Gelenkwellen (6, 7) als Kardanwellen ausgeführt sind; und/oder
b) **dass** die Achse (8) eine Hinterachse des Nutzfahrzeugs ist, deren Achsdifferential (8a) antriebsmäßig mit einer der Gelenkwellen verbunden ist.

11. Nutzfahrzeug nach einem der vorhergehenden Ansprüche, **dadurch gekennzeichnet,**
a) **dass** die elektrische Maschine eine Dauerleistung von mindestens 100 kW, 120 kW, 150 kW oder mindestens 200 kW aufweist, und/oder
b) **dass** die elektrische Maschine eine Spitzenleistung von mindestens 250 kW, 300 kW oder 320 kW aufweist, und/oder
c) **dass** die elektrische Maschine eine Nenndrehzahl von mindestens 5.000 min-1, 7.500 min-1, 10.000 min-1, 12.500 min-1 oder 15.000 min-1 aufweist; und/oder
d) **dass** die elektrische Maschine für die Nutzung einer Spannungsklasse von 400 V oder von 800 V, insbesondere einer Zwischenkreisspannungsklasse bis 800 V, ausgelegt ist.

12. Nutzfahrzeug nach einem der vorhergehenden Ansprüche, **gekennzeichnet durch** zwei generatorisch und motorisch betreibbare elektrischen Maschinen, die am Anpassgetriebe befestigt sind und über dieses antriebsmäßig mit der Achse verbindbar sind.
